# EUROPÄISCHE PATENTSCHRIFT

(11) **EP 0 761 743 B1**
(45) Veröffentlichungstag und Bekanntmachung des Hinweises auf die Patenterteilung: **20.10.2010**
(21) Anmeldenummer: 96810549.4
(22) Anmeldetag: 16.08.1996
(51) Int. Cl.: C08K 11/00, C08J 3/12

(54) **Verwendung von feinstteiligen Thermoplasten**
Use of ultrafine thermoplasts
Utilisation des thermoplasts ultrafins

(30) Priorität: 31.08.1995 CH 247095
(43) Veröffentlichungstag der Anmeldung: 12.03.1997
(73) Patentinhaber: 3A Technology & Management AG, 8212 Neuhausen am Rheinfall (CH)
(72) Erfinder: Ehrat, Rainer, 8207 Schaffhausen (CH); Watrinet, Hanns, Benton, Kentucky 42025 (US)

(56) Entgegenhaltungen:
- GB-A- 1 554 579
- GB-A- 1 554 960
- JP-A- 06 100 727
- JP-A- 07 041 561
- US-A- 4 029 863
- US-A- 5 091 508
- DATABASE WPI Derwent Publications Ltd., London, GB; AN 88-073925 XP002001078 & JP-A-63 027 532 (TORAY IND INC) , 5.Februar 1988

## Beschreibung

Vorliegende Erfindung betrifft die Verwendung einer Formmesse enthaltend feinstteilige Thermoplaste in gemahlener Form.

Es ist bekannt, Thermoplaste für verschiedene Einsatzzwecke in fein- bis feinstteiliger Form einzusetzen. Eine feinstteilige Form wird beispielsweise angestrebt, wenn Thermoplaste in anderen Stoffen möglichst homogen gemischt eingesetzt werden müssen. Da es sich in Gemischen beim Thermoplasten sehr oft um den teureren Bestandteil handelt oder der Thermoplast nur Hilfsmittel, jedoch nicht die Wirkungskomponente darstellt oder die Eigenschaften des Thermoplasten modifiziert werden müssen, ist man bestrebt, den Thermoplasten in möglichst kleinen Anteilen in der jeweiligen Mischung einzusetzen.

Thermoplaste lassen sich beispielsweise nicht beliebig oder nur mit hohem Aufwand durch Mahlen zerkleinern und mittlere Korngrössen kleiner als 400 µm sind nicht erzielbar. Beim Mahlprozess wird Wärme freigesetzt und die Thermoplaste, je nach Art, insbesondere mit klebenden oder leichtschmelzenden Eigenschaften, sind alsbald nicht mehr mahlbar. Zur Vermeidung dieser Nachteile ist es bekannt kryogene Mahlprozesse einzusetzen. Das Mahlgut wird beispielsweise durch verflüssigten Stickstoff gekühlt und versprödet dabei und das Mahlgut wird in gekühltem Zustande dem Mahlprozess unterworfen. Auch dieses Verfahren ist bezüglich der Mahlfeinheit begrenzt und die Ausbeute ist schlecht

Um Thermoplaste, wie z.B. Polyolefine, in feinere Korngrössen zu bringen, als diese durch Mahlen erzielbar sind, werden Fällprozesse angewendet. Diese Verfahren vermögen Thermoplaste in feinstteiliger Form zu erzeugen, es handelt sich dabei um stufenweise durchgeführte Verfahren mit langen Zykluszeiten, mit Emissionen und es resultieren grosse Mengen an Restchemikalien, wie verunreinigtes Fällmedium oder Restlösemittel. Dadurch werden die durch Fällung erhaltenen Produkte teuer. Im weiteren sind verschiedene Polymere ungeeignet, um durch Fällprozesse feinstteilige Pulver herzustellen.

GB 1 554 579 und 1 554 960 beschreiben Verfahren zur Herstellung von Aminoplasten in einer Korngrösse von unter 100 µm zur weiteren Verarbeitung zu Formkörpern. Der ausgehärtete Aminoplast wird einem zweistufigen Mahlprozess unterworfen.

Die US 5,091,508 bezieht sich auf die Modifizierung der Kristallisationstemperatur von Polymeren durch mahlen der Polymere bei tiefen Temperaturen.

Im Abstract der JP7041561 wird ein Verfahren zur geräuscharmen und erweichungsfreien Zerkleinerung von Kunststoffmaterial beschrieben. Das Verfahren eignet sich für Ionentauscherharze und wird in Gegenwart einer Kühlflüssigkeit durchgeführt.

Gemäss dem Abstract der JP6100727 wird ein mit Säure gequollener Graphit zerkleinert und danach mit einem Polyethylen verknetet. Die Masse kann zu elektrisch leitenden leichtgewichtigen Produkten verarbeitet werden.

Aus DE-A 1 679 823 ist ein Verfahren zur Herstellung feinstteiliger Thermoplaste durch Herstellen eines gemisches aus Thermoplasten und Füllstoffen und Mahlen des gemisches bekannt.

Aufgabe vorliegender Erfindung ist es, als Formmasse geeignete feinstteilige. Thermoplaste in gemahlener Form und ein Verfahren zu deren Herstellung zur Verfügung zu stellen. Das Verfahren soll einfach und kostengünstig durchzuführen sein und die Produkte sollen die Thermoplaste in den gewünschten Korngrössen enthalten.

Erfindungsgemäss wird dies durch die Verwendung mit den Merkmalen des Anspruchs 1 erreicht.

Bevorzugt sind Thermoplaste, die eine mittlere Korngrösse von 1 bis 400 µm, besonders bevorzugt von 10 bis 300 µm, vorteilhaft von 80 bis 200 µm und insbesondere von 80 bis 120 µm aufweisen.

Zweckmässig werden als Thermoplaste beispielsweise Polyolefine eingesetzt. Beispiele für Polyolefine sind, Polyethylen, Polyethylen hoher Dichte (HDPE, Dichte grösser als 0,944 g/cm³), Polyethylen mittlerer Dichte (MDPE, Dichte 0,926-0,940 g/cm³), lineares Polyethylen mittlerer Dichte (LMDPE, Dichte 0,926-0,940 g/cm³), Polyethylen niedriger Dichte (LDPE, Dichte 0,910-0,925 g/cm³) und lineares Polyethylen niedriger Dichte (LLDPE, Dichte 0,916-0,925 g/cm³), Polypropylen, isotaktisches oder ataktisches Polypropylen, kristallines oder amorphes Polypropylen oder Gemische davon, Poly-1-buten, Poly-3-methylbuten, Poly-4-methylpenten. Weitere Beispiele sind Copolymere oder Coextrudate der genannten Polyolefine und Ionomerharze, wie z.B. von Polyethylen mit Vinylacetat (EVA) oder Acrylsäure, oder z.B. Ionomerharze, wie Copolymerisate von Ethylen mit etwa 11 % Acrylsäure, Methacrylsäure, Acrylestern, Tetra-fluorethylen oder Polypropylen, ferner statistische Copolymere, Block-Copolymere oder Olefinpolymer-Elastomer-Mischungen oder Terpolymere, beispielsweise Ethylen-Propylen-Dien-Kautschuk (EPDM) oder AcrylnitrilButadien-Kautschuk/Polypropylen (NBR/PP). Bevorzugt sind Polyethylene und Polypropylene.

Besonders bevorzugt sind Polyethylen niedriger Dichte, lineares Polyethylen niedriger Dichte, Polyethylen hoher Dichte, Ethylen-Vinylacetat-Copolymere (EVA), Ethylen-Acrylsäure-Acrylsäureester-Terpolymere (EAA) oder Ethylen-Acrylester-Maleinsäureanhydrid-Terpolymere (EEAMA).

Vorteilhaft sind elastische und klebrige Formen der Polymere und insbesondere der Polyolefine, sowie thermoplastische Elastomere, wie EPDM, NBR, Polyisopren oder gegebenenfalls Naturkautschuk.

Der Füllstoff kann ein reiner Stoff oder ein Stoffgemisch darstellen. Der Füllstoff oder ein Füllstoffgemisch kann Stoffe aus den Reihen der nachfolgend aufgeführten Beispiele enthalten oder aus solchen Stoffen bestehen.

Zweckmässig sind Füllstoffe, welche die Hydroxide, Carbonate oder Oxide des Aluminiums, des Magnesiums oder des Calciums oder Gemische davon enthalten oder daraus bestehen. Andere Füllstoffe sind Füllstoffe anorganischer oder mineralischer Natur aus der Reihe Talkum, Vermiculite, Perlite, Glimmer, Gläser, Tone, Kieselerde, Calciumsulfat, Bariumsulfat, Kreide, Titandioxid, Silikate, Quarze, Russ, Graphit, Metallpulver, wie z.B. Fe, Ni, Cr, Al, Cu, Zn usw. oder Gemische, enthaltend genannte Füllstoffe oder bestehend aus genannten Füllstoffen.

Zu den Füllstoffen können in vorliegendem Fall auch Pigmente, wie anorganische oder organische Pigmente zählen. Beispiele von anorganischen Pigmenten sind Kreide, Ocker, Umbra, Grünerde, Graphit aus der Reihe der in der Natur vorkommenden Pigmente. Beispiele von synthetischen anorganischen Pigmenten sind Weiss-, Schwarz-, Bunt- und Glanzpigmente, der Reihen Titanweiss, Bleiweiss, Zinkweiss, Russ, Eisenoxidschwarz, Manganschwarz, Bleichchromat, Mennige, Cobaltblau, Ultramarin und andere.

Beispiele von organischen Pigmenten sind, neben z.B. den natürlich vorkommenden Knochenkohle und Indigo die synthetischen Azo-Pigmente, Dioxazin-, Chinacridon-, Phtalocyanin-, Isoindolinon-, Perylen- und Perinon-, Metallkomplex- und Alkaliblaupigmente.

Beispiele von organischen Füllstoffen sind cellulosische Produkte, wie Holzmehl, natürliche Fasern, wie Wolle, Baumwolle, Flachs, Hanf, Chinaschilf oder synthetische Fasern.

Das Gemisch nach vorliegender Erfindung kann ferner andere Additive oder Zusätze, wie Stabilisatoren, Anti-Oxidantien, Weichmacher, Gleitmittel, Emulgatoren, Antistatika, Treibmittel, Flammhemmmittel, sog. Modifier usw., enthalten. Der Anteil der Additive oder Zusätze kann beispielsweise von 0,001 bis 10 Gew.-%, bezogen auf das vorgenannte Gemisch aus Thermoplast und Füllstoff, betragen.

Bevorzugte Füllstoffe sind die Hydroxide und Carbonate des Aluminiums, Magnesiums und Calziums und namentlich Al(OH)₃, Mg(OH)₂, Ca(OH)₂, MgCO₃ und CaCO₃.

Zweckmässig weisen die angewendeten Füllstoffe eine mittlere Korngrösse von 0,1 bis 200 µm, vorguzgsweise 1 bis 100 µm auf.

Erfindungsgemäss beträgt der Füllstoffgehalt 40 bis 90 Gew.-%, bezogen auf das Gemisch aus Thermoplast und Füllstoff. Vorteilhaft liegt der Füllstoffgehalt bei 50 bis 75 Gew.-%, bezogen auf das Gemisch. Entsprechend liegt der Anteil des Thermoplasten bei 10 bis 60 Gew.-%, vorteilhaft bei 25 bis 50 Gew.-%, bezogen auf das Gemisch.

Das erfindungsgemässe Verfahren zur Herstellung der feinstteiligen Thermoplaste in gemahlener Form wird derart ausgeführt, dass ein Gemisch enthaltend 10 bis 60 Gew.-%, bezogen auf das Gemisch, Thermoplaste und 40 bis 90 Gew.-%, bezogen auf das Gemisch, Füllstoffe enthält, und die Thermoplaste und die Füllstoffe gemeinsam in einer Prallmühle auf eine mittlere Korngrössen D₅₀ von 400 µm und weniger gemahlen werden.

Beispielsweise werden die Thermoplaste bevorzugt auf eine mittlere Korngrösse von 1 bis 400 µm, besonders bevorzugt auf 10 bis 300, vorteilhaft von 80 bis 200 und insbesondere auf 80 bis 120 µm gemahlen.

Die Thermoplaste und Füllstoffe allgemein, wie auch bevorzugte Formen davon, welche im Gemisch gemahlen werden, sind vorstehend beschrieben.

Die Bestandteile des Gemisches, wie die Thermoplaste und die Füllstoffe und fallweise weitere Additive können compoundiert oder granuliert werden. Dazu können die Bestandteile des Gemisches in eine Mischeinrichtung, wie einen Innenmischer oder Doppelschneckenextruder oder Einschneckenextruder oder Kneter gegeben und zu einem homogenen Compound verarbeitet werden. Die so gewonnenen Compounds können beispielsweise in einer Schneidmühle einer Vorzerkleinerung unterworfen werden.

In der Regel wird der Thermoplast aufgeschmolzen und beispielsweise in einem Extrusions- oder Innenmischer mit den Füllstoffen und fallweise den Additiven vermischt und in plastischem Zustand granuliert.

Zweckmässig ist es, unmittelbar nach dem Compoundieren ein Granulat, beispielsweise durch Stranggranulierung, Heissabschlag, Unterwassergranulierung oder Bandgranulierung zu erzeugen.

Gegebenenfalls können Granulierhilfsmittel, wie Wasser und/oder Gleitmittel beigegeben werden.

Die Bestandteile des Compounds können sowohl als grobes Mahlgut, wie auch als vorbereitete Granulate dem eigentlichen Mahlprozess unterworfen werden. Für diesen Mahlprozess werden Prallmühlen, wie beispielsweise konventionelle Prallmühlen, Hammermühlen, Pralltellermühlen, Stiftmühlen, Schlagmühlen oder Strahlmühlen angewendet.

Bevorzugt sind Schlagmühlen, Hammermühlen, Pralltellermühlen oder Stiftmühlen.

Während des Mahlprozesses kann die Mühle und/oder das Mahlgut gegebenenfalls gekühlt werden. Als Kühlmedium können Gase und dabei insbesondere Luft oder Stickstoff, Flüssigkeiten, wie Wasser, Kühlsole oder Flüssigstickstoff angewendet werden. In der Regel genügt es, die Temperatur des Mahlgutes auf Raumtemperatur oder beispielsweise auf Temperaturen von -10 bis 40° C oder zweckmässig von 10 bis 30° C und insbesondere von 15 bis 25° C zu halten.

Die aus dem Mahlprozess gewonnenen Erzeugnisse stellen somit die auf das gewünschte Mass zerkleinerten Thermoplaste in Mischung mit dem Füllstoff oder Füllstoffgemisch dar.

Da die Thermoplaste in aller Regel nicht allein angewendet werden, sondern beispielsweise unter Ausnützung der klebenden oder erweich- oder sinterbaren Eigenschaften mit den Füllstoffen zu Körpern verschiedenster Art verarbeitet werden, stellt die Mischung ein Vorprodukt oder auch bereits ein Endprodukt dar.

Es wurde auch gefunden, dass mit vorliegenden feinstteiligen Thermoplasten -- zur Erzeugung der gleichen Wirkung -- die Partikelgrösse des Thermoplasten im Gemisch wesentlich grösser, z.B. 1,1 bis 5 fach grösser, gewählt werden kann, als dies bei der Verwendung eines reinen Thermoplasten nach dem Stande der Technik möglich wäre.

Der Füllstoff kann nach dem Mahlen gegebenenfalls durch Lösen oder durch chemische Reaktion vom feinstteiligen Thermoplasten getrennt werden.

Beispielsweise kann der feinstteilige Thermoplast im Gemisch mit dem Füllstoff als Bindemittel für hochgefüllte Formmassen angewendet werden. Reine Thermoplasten können oft aus Gründen des Brandverhaltens, der thermischen Eigenschaften, der mechanischen Eigenschaften oder des Preises nicht verwendet werden. Deshalb wird angestrebt, den Thermoplasten mit grösseren Mengen, z.B. billigen oder unbrennbaren Füllstoffen zu versetzen. Ein hoher Füllstoffanteil vermindert die Kohäsion einer Formmasse in sich oder auch zwischen der Formmasse und der Formmasse anliegenden weiteren Materialien. Durch die erfindungsgemäss erzielbaren feinsten Thermoplastteilchen wird eine grosse Homogenität dieser Thermoplastteilchen im Gemisch mit dem Füllstoff und damit z.B. eine hervorragende Festigkeit einer Formmasse in sich oder auch zwischen einer derartigen Formmasse und daran anliegenden weiteren Materialien, beispielsweise nach einem Verpressen oder Versintern erreicht.

Die gleichen Vorteile ergeben sich beispielsweise bei der Verwendung von Pigmenten, wie Farbpigmenten als Füllstoffe. Bei der Verwendung der feinstteiligen Thermoplaste im Gemisch mit Pigmenten als Füllstoffe ergeben sich hochwertige Pulver für die Pulverbeschichtung. Eine andere Anwendung der erfindungsgemässen feinstteiligen Thermoplaste liegt im Bereich der Elektroden für Batterien.

## Patentansprüche

1. Verwendung einer Formmasse enthaltend feinstteilige Thermoplaste aus einem gemahlenen Gemisch aus Thermoplasten und Füllstoffen, wobei zur Herstellung der feinstteiligen Thermoplaste 10 bis 60 Gew.-%, bezogen auf das fertige Gemisch, Thermoplaste aufgeschmolzen und mit 40 bis 90 Gew.-%, bezogen auf das fertige Gemisch, Füllstoffen vermischt werden, das Gemisch (a) compoundiert wird und die Compounds in einer Schneidmühle vorzerkleinert werden, oder (b) in plastischem Zustand granuliert wird, und die vorzerkleinerten Compounds bzw. das Granulat in einer Prallmühle auf mittlere Korngrössen für den Thermoplasten D₅₀ von 400 µm und weniger gemahlen werden, für Elektroden von Batterien oder als Pulver für Pulverbeschichtungen.

2. Verwendung nach Anspruch 1, **dadurch gekennzeichnet, dass** die Thermoplaste auf eine mittlere Korngrösse von 10 bis 300 µm, zweckmässig 80 bis 200 µm und vorzugsweise 80 bis 120 µm gemahlen werden.

3. Verwendung nach Anspruch 1, **dadurch gekennzeichnet, dass** Polyolefine oder polyolefinhaltige Thermoplaste als Thermoplastanteil im Gemisch gemahlen werden.

4. Verwendung nach Anspruch 1, **dadurch gekennzeichnet, dass** als Füllstoff die Hydroxide, Carbonate oder Oxide des Aluminiums, des Magnesiums oder des Kalziums oder Gemische davon im Gemisch verwendet werden.

5. Verwendung nach Anspruch 1, **dadurch gekennzeichnet, dass** die in einer Schneidmühle vorzerkleinerten Compounds bzw. das Granulat in einer Schlagmühle, Hammermühle, Pralltellermühle oder Stiftmühle gemahlen werden.

## Claims

1. Use of a moulding material containing ultra-fine thermoplastic polymers made of a ground mixture of thermoplastic polymers and fillers, wherein, to produce the ultra-fine thermoplastic polymers, 10 to 60 % by weight, based on the finished mixture, of thermoplastic polymers are fused and mixed with 40 to 90 % by weight, based on the finished mixture, of fillers, the mixture (a) is compounded and the compounds coarse-crushed in a cutting mill, or (b) is granulated in a plastic state, and the coarse-crushed compounds or the granules are ground in an impact crusher to average grain sizes for the thermoplastic polymers D₅₀ of 400 µm and less, for battery electrodes or as a powder for powder coatings.

2. Use according to claim 1, **characterised in that** the thermoplastic polymers are ground to an average grain size of from 10 to 300 µm, advantageously 80 to 200 µm and preferably 80 to 120 µm.

3. Use according to claim 1, **characterised in that** polyolefins or polyolefin-containing thermoplastic polymers are ground as the thermoplastic polymer content in the mixture.

4. Use according to claim 1, **characterised in that** the hydroxides, carbonates or oxides of aluminium, magnesium or calcium, or mixtures thereof, are used as the filler in the mixture.

5. Use according to claim 1, **characterised in that** the compounds coarse-crushed in a cutting mill or the granules are ground in a beater mill, hammer mill, impact disk mill or pinned disk mill.

## Revendications

1. Utilisation d'une masse ou poudre moulable renfermant des matières thermoplastiques en particules ultrafines, et constituée d'un mélange broyé de matières thermoplastiques et de substances de charge, pour des électrodes de batterie ou en tant que poudre pour des revêtements de poudre, la fabrication des matières thermoplastiques en particules ultrafines se faisant de la manière suivante, à savoir que l'on fait fondre 10 à 60% en poids, rapporté au mélange fini, de matières thermoplastiques, et on les mélange à 40 à 90% en poids, rapporté au mélange fini, de substances de charge, le mélange étant ensuite (a) compoundé et les compounds pré-broyés dans un broyeur à couteaux, ou (b), dans l'état plastique, transformé en granules, et les compounds pré-broyés ou respectivement les granules étant alors broyés dans un broyeur à impact à une grosseur de grain moyenne pour la matière thermoplastique D₅₀ de 400 µm et moins.

2. Utilisation selon la revendication 1, **caractérisée en ce que** les matières thermoplastiques sont broyées à une grosseur de grain moyenne de 10 à 300 µm, avantageusement de 80 à 200 µm, et de préférence de 80 à 120 µm.

3. Utilisation selon la revendication 1, **caractérisée en ce que** l'on utilise des polyoléfines ou des matières thermoplastiques renfermant des polyoléfines en tant que matières thermoplastiques dans le mélange.

4. Utilisation selon la revendication 1, **caractérisée en ce que** l'on utilise, en tant que substance de charge dans le mélange, les hydroxydes, carbonates ou oxydes de l'aluminium, du magnésium ou du calcium, ou bien des mélanges de ceux-ci.

5. Utilisation selon la revendication 1, **caractérisée en ce que** les compounds pré-broyés dans un broyeur à couteaux ou respectivement les granules sont broyés dans un broyeur à barres, un broyeur à marteaux, un broyeur à disques de choc ou un broyeur à plateaux à pointes.
